# EUROPEAN PATENT SPECIFICATION

(11) **EP 3 674 756 B1**
(45) Date of publication and mention of the grant of the patent: **23.11.2022**
(21) Application number: 18847815.0
(22) Date of filing: 23.08.2018
(51) Int. Cl.: G02B 5/18, B42D 25/328, B42D 25/378, B42D 25/387, G02B 5/02, G09F 3/02, G09F 19/12, G02B 5/00

(54) **DISPLAY BODY, ANTI-COUNTERFEITING THREAD PAPER, AND ANTI-COUNTERFEITING MEDIUM**
ANZEIGEKÖRPER, FÄLSCHUNGSSICHERES FASERPAPIER UND FÄLSCHUNGSSICHERES MEDIUM
CORPS D'AFFICHAGE, PAPIER À FIL ANTI-CONTREFAÇON ET SUPPORT ANTI-CONTREFAÇON

(30) Priority: 23.08.2017 JP 2017160195
(43) Date of publication of application: 01.07.2020
(73) Proprietor: Toppan Printing Co., Ltd., Tokyo 110-0016 (JP)
(72) Inventor: IDE, Hidetaka, Tokyo 110-0016 (JP); KODA, Soko, Tokyo 110-0016 (JP)
(74) Representative: Hoffmann Eitle
(86) International application number: PCT/JP2018/031253
(87) International publication number: WO 2019/039572

(56) References cited:
- EP-A1- 2 960 690
- EP-A1- 3 124 283
- WO-A1-2014/072358
- WO-A1-2015/147283
- DE-A1-102005 028 162
- DE-A1-102007 061 979
- DE-A1-102009 056 933
- JP-A- 2007 072 188
- JP-A- 2013 095 055
- JP-A- 2013 174 683
- US-A1- 2014 028 012

## Description

### [Technical Field]

The present invention relates to a display using optical resonance, such as surface plasmon resonance, and relates to anti-counterfeiting thread paper and an anti-counterfeiting medium to which the display is applied.

### [Background Art]

Articles such as valuable securities, certificates, brand products, expensive products, electronic devices or individual certification media are desired to be difficult to counterfeit to protect the value and information of the articles from others. For this purpose, displays or media which are difficult to counterfeit may be affixed to such articles.

As media that are difficult to counterfeit, there are known media which display image information using a plurality of cells defined by a diffraction grating. As this type of media, there are known displays which include a micro-image in specific cells among the plurality of cells. The micro-image corresponds to a bitmap pattern having two or more levels and can be observed, for example, by a microscope (e.g., see JP 2008-83226 A).

Recently, there is also proposed a display in which the diffraction grating is imparted with a watermark verification function using a plasmon effect, for the purpose of imparting the display with a verification function (e.g., see JP 2016-503356 A).

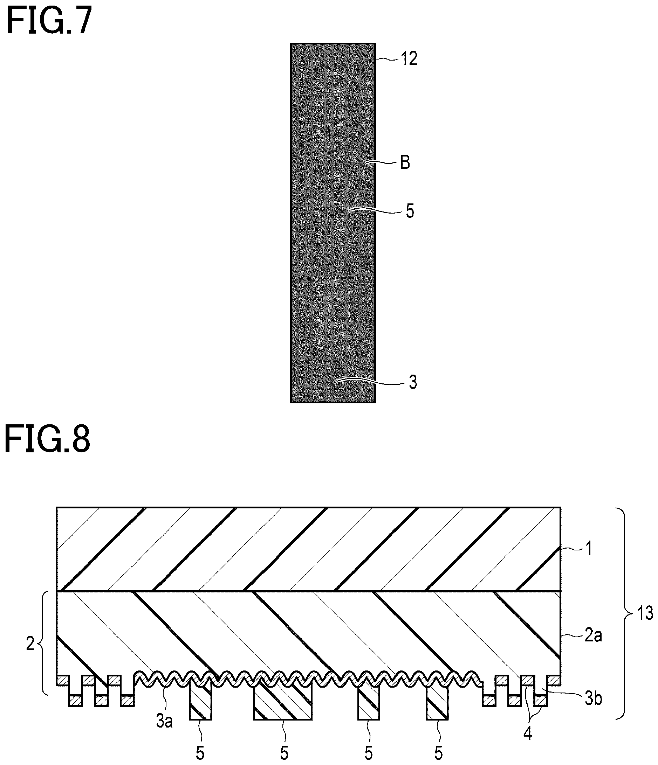

DE 10 2007 061 979 A1 shows in Fig. 8 a cross-section through a security element having a transparent substrate foil, on which a UV embossing lacquer layer is imprinted and embossed in the form of a rectangular profile. The rectangular profile can exhibit a period length of 300 nm, a bridge width of 100 nm and a pitch of 100 nm. An aluminum layer having a thickness of for example 30 nm was then vertically vapor-deposited on the embossing lacquer layer and the resulting structure provided with a further protective lacquer layer. Thus, the security element shown in Fig. 8 has a subwavelength grating.

The security elements described in WO 2014/072358 A1 comprise a relief structure and may additionally have a layer which contains dyes and/or luminescent substances. It is mentioned that the color impression and/or color effect which is generated by the relief structure can be significantly strengthened and spectrally modified if a dye and/or luminescent substance is located in the immediate vicinity of the metal layer, into which the relief structure is molded. It is further mentioned in WO 2014/072358 A1 that the dye can have fluorescent properties. Lumogen Red is given as an example of a corresponding dye.

The use of a luminescent dye which is irradiated by UV light is known from DE 10 2005 028 162 A1.

### [Summary of the Invention]

However, the method according to JP 2016-503356 A has an issue that a display exerting a similar watermark effect can be produced by partially and finely providing color-ink printing.

Embodiments of the present invention have been made in light of the circumstances set forth above and each aim to provide a display capable of preventing production of imitation products by use of color inks and which is capable of more reliably detecting counterfeiting or imitation, and to provide anti-counterfeiting thread paper and an anti-counterfeiting medium to which the display is applied.

The display that achieves the aim set forth above is a display as defined in independent claim 1. The preamble of claim 1 is formulated in view of DE 10 2007 061 979 A1. Preferred embodiments of the display are the subject of the dependent claims 2 to 4. The present invention further relates to an anti-counterfeiting thread paper as defined in independent claim 5 and the corresponding dependent claim 6, and to an anti-counterfeiting medium as defined in independent claim 7.

The display of any one of the embodiments of the present invention enables observation of both the color due to optical resonance, such as surface plasmon resonance, occurring in the optical resonance structure layer, and the color of the fluorescent printing by simultaneously applying visible light and light outside the visible light range to the display. In particular, the optical resonance in the optical resonance region of the optical resonance structure layer has low dependency on the light incident angle. Accordingly, there is no color change depending on the observation conditions and thus high visibility is ensured. Therefore, authenticity is easily verified.

When only visible light is applied to the display, light emission from the fluorescent printing is no longer observed. Thus, by applying only visible light to the display, part of specific information can be hidden.

Furthermore, provision of a diffractive structure to the embossed layer enables observation of three luminescent colors, i.e., the luminescent color of optical resonance, such as surface plasmon resonance, occurring in the optical resonance region of the optical resonance structure layer, the luminescent color of the fluorescent printing, and the iridescent color of diffracted light of the diffractive structure.

Using such a display, anti-counterfeiting thread paper or an anti-counterfeiting medium that can easily verify authenticity can be produced.

For example, if a display having some color is counterfeited by using some printing method, the counterfeit product may appear to have a similar color when observed; however, when the counterfeit product is observed from the opposite side by holding it up to light, no color change occurs in the counterfeit product. In this regard, in the display according to any one of the embodiments of the present invention, the transmitted light develops a completely different color, and the fluorescent printing, which develops no color in visible light, develops color when ultraviolet rays are applied thereto. Thus, in terms of these two inspections, authenticity is easily verified.

As described above, any one of the embodiments of the present invention achieves a display capable of preventing production of imitation products by use of color inks and is capable of more reliably detecting counterfeiting or imitation, and achieves anti-counterfeiting thread paper and an anti-counterfeiting medium to which the display is applied.

### [Brief Description of the Drawings]

Fig. 1 is a cross-sectional view illustrating an example of a display according to a first embodiment of the present invention.
Fig. 2 is a cross-sectional view illustrating an example of a display according to a second embodiment of the present invention.
Fig. 3 is a plan view illustrating the display observed when visible light and light outside the visible light range are applied thereto, according to the first or second embodiment of the present invention.
Fig. 4 is a partial enlarged view illustrating an optical resonance structure layer that is a specific configuration example of a microstructure and a metal layer.
Fig. 5 is a cross-sectional view illustrating an example of a display according to a third embodiment of the present invention.
Fig. 6 is a plan view illustrating the display observed from a fluorescent printing side when visible light and light outside the visible light range are applied thereto, according to the third embodiment of the present invention.
Fig. 7 is a plan view illustrating the display observed from a carrier side when visible light and light outside the visible light range are applied thereto, according to the third embodiment of the present invention.
Fig. 8 is a cross-sectional view illustrating an example of a display according to a fourth embodiment of the present invention.
Fig. 9 is a plan view illustrating the display observed from a carrier side when visible light and light outside the visible light range are applied thereto, according to the fourth embodiment of the present invention.
Fig. 10 is a cross-sectional view illustrating an example of a display according to a fifth embodiment of the present invention.
Fig. 11 is a plan view illustrating the display observed from a carrier side when visible light and light outside the visible light range are applied thereto, according to the fifth embodiment of the present invention.
Fig. 12 is a plan view illustrating the display observed from a carrier side when only visible light is applied thereto, according to the fifth embodiment of the present invention.
Fig. 13 is a cross-sectional view illustrating an example of an anti-counterfeiting transfer foil according to a sixth embodiment of the present invention.
Fig. 14 is a cross-sectional view illustrating an example of anti-counterfeiting paper to which the anti-counterfeiting transfer foil according to the sixth embodiment of the present invention has been transferred, and from which the release layer and the carrier have been released.
Fig. 15 is a plan view illustrating an example of anti-counterfeiting paper to which the anti-counterfeiting transfer foil according to the sixth embodiment of the present invention has been transferred.
Fig. 16 is a cross-sectional view illustrating an example of anti-counterfeiting paper according to a seventh embodiment of the present invention.
Fig. 17 is a plan view illustrating a front side example of the anti-counterfeiting paper according to the seventh embodiment of the present invention.
Fig. 18 is a plan view illustrating a rear side example of the anti-counterfeiting paper according to the seventh embodiment of the present invention.

### [Description of the Embodiments]

With reference to the drawings, several embodiments of the present invention will be described.

The reference signs in the drawings used for explaining the embodiments of the present invention are the same between the same components to avoid duplicate description.

It should be noted that information referred to in the following embodiments of the present invention corresponds to any of motifs, characters, numerals, a combination of motifs and characters, a combination of characters and numerals, a combination of numerals and motifs, and a combination of motifs, numerals and characters. Furthermore, symbols, marks, and the like other than the information mentioned above may be used.

### (First embodiment of the present invention)

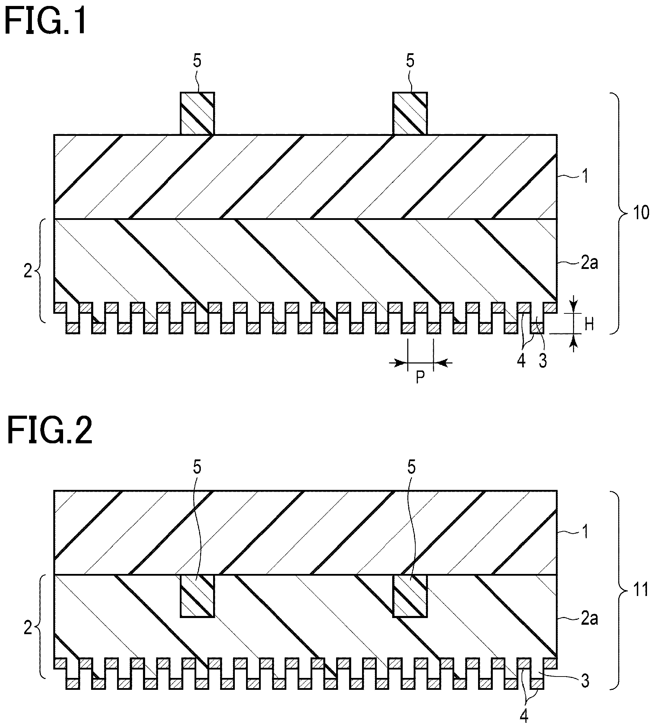

Fig. 1 is a cross-sectional view illustrating an example of a display 10 according to a first embodiment of the present invention.

Specifically, the display 10 may include a carrier 1, an optical resonance structure layer 2 and a fluorescent printing 5.

The carrier 1 holds the optical resonance structure layer 2. As a material for the carrier 1, a plastic film transmitting visible light may be used. The plastic film may absorb ultraviolet rays. The plastic film may be a polyethylene terephthalate film, a polyethylene naphthalate film, a polyimide film, a polyethylene film, a polypropylene film, a heat resistant vinyl chloride film, or the like. Of these resins, polyethylene terephthalate resin may further be used due to having high heat resistance and a stable thickness.

The optical resonance structure layer 2 includes an embossed layer 2a laminated to the carrier 1, and a metal layer 4 provided onto the embossed layer 2a. The embossed layer 2a has a surface facing away from the carrier 1, on which a microstructure 3 constituted of micro-asperities is formed. The region in the optical resonance structure layer 2 where the microstructure 3 is formed is an optical resonance region. In the optical resonance region, the metal layer 4 on the microstructure 3 resonates with light and the light produced by resonance is transmitted, diffused or reflected.

The embossed layer 2a is formed as a resin layer on one surface of the carrier 1. The resin may be a thermoplastic resin, a thermosetting resin, an ultraviolet-curable resin, an electron beam-curable resin, or the like. The thermoplastic resin may be an acrylic resin, an epoxy resin, a cellulose resin, a vinyl resin, or the like. The resin may be a urethane resin formulated by adding polyisocyanate as a cross-linking agent to an acrylic polyol, polyester polyol or the like having a reactive hydroxyl group for crosslinkage, or a melamine-based resin, a phenol-based resin, or the like. The ultraviolet- or electron beam-curable resin may be epoxy (meth)acrylate, urethane (meth)acrylate, or the like. These resins may be applied by a known application method, such as gravure printing, micro gravure printing, or the like.

The microstructure 3 is formed by pressing a plate, on which a microstructure is formed, against the embossed layer 2a.

A master plate for the pressing plate having a microstructure may be formed by applying an electron beam to a surface of an electron beam-curable resin, exposing the resin to produce a desired pattern (microstructure pattern) and developing the exposed pattern. Then, a metal film may be formed on a surface of the master plate by electroplating to duplicate the pattern of asperities of the relief master plate, for usage as a pressing plate. Alternatively, the pattern of asperities may be directly formed on a metal plate by using a laser beam, for usage as a pressing plate.

The microstructure 3 is formed on a surface of the embossed layer 2a by thermally pressing the pressing plate formed by either of the methods against the embossed layer 2a, or by curing an uncured curable resin, with a pressing plate being brought into close contact therewith.

Resin materials for the embossed layer 2a or methods of forming the microstructure 3 are not limited to those mentioned above.

As shown in Fig. 1, the microstructure 3 may have convexities each having a rectangular cross section. However, convexities of the microstructure 3 according the embodiment of the present invention may each have a cross section that is not limited to a rectangular shape but may have a cross section of any desired shape as long as surface plasmon excitation occurs due to entry of visible light into the microstructure 3 and the metal layer 4 and there occurs a phenomenon of changing color before and after entry of visible light due to optical resonance. The cross section of the convexities of the microstructure 3 may each have a shape based on a cone, three-sided pyramid, column, rectangular parallelepiped, or the like.

When the convexities of the microstructure 3 each have a rectangular cross section as shown in Fig. 1, surface plasmon excitation may easily occur under conditions that the convexities each have a height H in the range of 20 nm or more and 800 nm, and more preferably 50 nm or more and 600 nm or less, and the convexities, if periodically formed, are arranged at an interval P in the range, for example, of 50 nm or more and 1,000 nm or less, and more preferably 100 nm or more and 600 nm or less.

The metal layer 4 is formed on the microstructure 3. The metal layer 4 may be formed by forming a metal film using a vacuum deposition method. With this method, a film can be formed on the embossed layer 2a without filling the asperities of the microstructure 3. Metal or a metal compound used for the metal layer 4 may be gold, silver, titanium nitride, aluminum or the like. The vacuum deposition method may be vacuum vapor deposition, sputtering, or the like. The metal layer 4 may have a thickness in the range of 20 nm or more and 100 nm or less. To achieve even more suitable light transmittance or to prevent defects, such as cracking, the metal layer 4 may have a thickness in the range of 40 nm or more and 60 nm or less.

The metal layer 4 may be provided across the surface of the microstructure 3. The metal layer 4 may be partially provided to the microstructure 3. When partially providing the metal layer 4, a metal layer may be provided across the surface of the microstructure 3 first by a vacuum deposition method, followed by selectively etching and removing portions where the metal layer 4 is not required. A mask may be used for the selective removal. The mask may be obtained by printing, or may be a mask on which an inorganic compound layer is partially formed. The partially provided metal layer 4 may have an outer shape of a curve. The outer shape may be a geometric pattern. The geometric pattern may be a colored geometric pattern.

The metal layer 4 may also be formed on a portion where the microstructure 3 is not formed. The metal layer 4 may have a thickness that is determined considering the influence of this case.

When the metal layer 4 is formed by a vacuum deposition method, the thickness of the metal film may vary depending on the surface configuration of an object on which the film is deposited even when the processing conditions are constant. However, in the embodiment of the present invention, such a surface configuration is formed with accurate control. Therefore, thickness variation of a metal film to be formed on asperities of various shapes can be estimated at the stage of designing the asperities by conducting verification experiments in advance. Accordingly, if thickness variation occurs in the metal film 4 due to variation in the microscopic asperities, a desired color can be achieved as a result of optical resonance that is caused by surface plasmon excitation or the like which is due to entry of visible light into the optical resonance structure layer 2.

The fluorescent printing 5 is provided to a surface of the carrier 1 facing away from the optical resonance structure layer 2. The fluorescent printing 5 is made of a binder resin comprising an organic polymer material in which a luminescent material is dissolved or dispersed. The luminescent material converts light, such as ultraviolet rays, infrared rays, X-rays or radioactivity, outside the range of visible light into visible light and becomes luminous. The luminescent material may be a fluorophore or phosphor, or a luminescent material that emits light due to external stimulation. Of these materials, a material that can be easily handled in actual use and emits light when irradiated with ultraviolet rays or infrared rays may be used. The binder resin may be an acrylic resin, a vinyl resin, a polyester resin, a urethane resin, or the like.

Fluorescence refers to emission of light near the visible range caused by external stimulation (excitation). When light is classified into three types, i.e. fluorescence, phosphorescence and luminescence, phosphorescence generally refers to emission of light whose duration seen by the eyes after excitation ceases has some duration (about 0.1 second) or more, luminescence generally refers to emission of light whose duration seen by the eyes is particularly long, and emission of light other than these is generally referred to as fluorescence. Any of the materials for fluorescence, phosphorescence and luminescence may be applied to the embodiment of the present invention. However, a fluorescent material may be applied to the embodiment of the present invention due to the desired purpose.

The fluorescent material may be an inorganic material, an organic material, a complex, or the like. Examples of the fluorescent material are as follows. A fluorescent agent which emits light when irradiated with ultraviolet rays may be an agent that is excited by ultraviolet rays and has a spectrum peak in the wavelength range of blue, green, red, or the like, when returning to an energy level lower than during excitation. An example of the inorganic material may be a material that is obtained by adding a small amount of metal (copper, silver, manganese, bismuth, lead, or the like) as an activator to a high purity fluorophore that is zinc sulfide or a sulfide of an alkaline earth metal to increase emission, followed by high temperature baking. Depending on the combination of the host crystal and the activator, the degree of hue, brightness, or color decay can be controlled. Examples of the organic material include a cyanine dye, a coumarin dye, a rhodamine dye, and the like. Fluorescent sites may be modified on the binder resin.

A fluorescent agent which emits light when irradiated with infrared rays may be an infrared-visible conversion fluorescent agent which is excited by infrared rays and becomes visibly luminous, or an agent which is excited by infrared rays and becomes luminous with a longer wavelength. The infrared-visible conversion fluorescent agent has an extraordinarily peculiar excitation mechanism. This fluorescent agent excites a plurality of infrared photons having small energy to permit them to be visibly luminous. These light emission mechanisms may be classified into two types. One is a mechanism which enables high excitation by multistage excitation of activator ions, and the other is a mechanism which enables high excitation by multiple resonance energy transfer from a sensitizer. The former is a mechanism that is observed in many host crystals using Er³⁺ or Ho³⁺ as an activator. The latter is a mechanism in which a sensitizer Yb³⁺ absorbs infrared rays and excites Er³⁺, Tm³⁺, Ho³⁺ or the like in the emission center at a high level by multistage energy transfer.

The fluorescent printing 5 is formed in a region overlapping with the region where asperities are formed in plan view. The fluorescent printing 5 may be formed, in particular, within the region where asperities are formed. The color of the emission wavelength of the fluorescent printing 5 may be a color similar to that of light resonating in the optical resonance region. The expression "color similar to" refers to a color whose difference in center wavelength of the emission wavelength or the resonance wavelength is 50 nm or less. The difference in this case may be 5 nm or more. The transmittance of the emission wavelength range in the resonance wavelength range may be 50% or more. The transmittance in this case may be 95% or less. Furthermore, a half width of a wavelength peak of visible light produced due to the light outside the visible light range being incident on the fluorescent printing is more than a half width of light transmitted therethrough due to the optical resonance. Thus, the range of light transmitted through the fluorescence wavelength range by optical resonance can be selectively filtered. When the color of the emission wavelength of the fluorescent printing 5 is similar to the color of light resonating in the optical resonance region, and the fluorescent printing 5 is observed against the background of the plasmon structure, the plasmon structure reflects light outside the resonance wavelength range. Thus, since the light reflected at the fluorescent printing 5 and the light reflected at the plasmon structure are in a complementary color relationship, the fluorescent printing 5 can be clearly observed. When the fluorescent printing 5 is observed via the plasmon structure, the color of light transmitted through the optical resonance region may be similar to the color of the fluorescent printing 5, but luminance may be different between these colors. Thus, similar colors may each appear as patterns having different luminance and the impression of the motif may change between front and back.

The ultraviolet rays that have excited the fluorophore of the fluorescent printing 5 are not transmitted through the metal layer 4 where the asperities are formed. Therefore, the motif of the fluorescent printing 5 can be observed only when ultraviolet rays are applied from the fluorescent printing 5 side, and cannot be observed when ultraviolet rays are applied from the metal layer 4 side. Ultraviolet rays that have been applied to the display 10 and have not been absorbed by the fluorescent printing 5 are reflected by the metal layer 4 and can be reused as excitation light for the fluorescent printing 5. Of the light emerging from the fluorescent printing 5, light that has emerged in the direction of the carrier 1 is guided through the carrier 1 and cannot be observed. However, the light incident on the asperities is prevented from being specularly reflected but is transmitted or scattered, and therefore fluorescence is prevented from being guided. Since guided light is observed as being flared, ghosting may occur in the fluorescent motif. However, provision of a plasmon structure to the other surface of the fluorescent printing 5 as in the configuration of the present invention can achieve a clear image without ghosting.

The metal layer 4 may be partially provided. Thus, a motif can be formed with or without the effects of the plasmons and the fluorescent printing 5. In particular, the portions where there is no metal layer 4 may be filled with a resin, such as an adhesive layer, so that fluorescence is guided. Thus, the flaring effect can be partially exerted on purpose. The surface of the filled-in resin facing away from the metal layer 4 can be an interface with the air. The opposite surface via the filled-in resin and the metal layer 4 can also be an interface with the air. Thus, the metal layer 4 and the motif of the fluorescent printing 5 can be made transparent. With this configuration, fluorescence can be easily guided through the resin with which the fluorescent printing 5 is in contact.

### (Second embodiment of the present invention)

Fig. 2 is a cross-sectional view illustrating an example of a display 11 according to a second embodiment of the present invention.

In the display 11, the fluorescent printing 5 is arranged being embedded in the optical resonance structure layer 2 and in contact with the carrier 1. The remaining configuration is the same as the display 10.

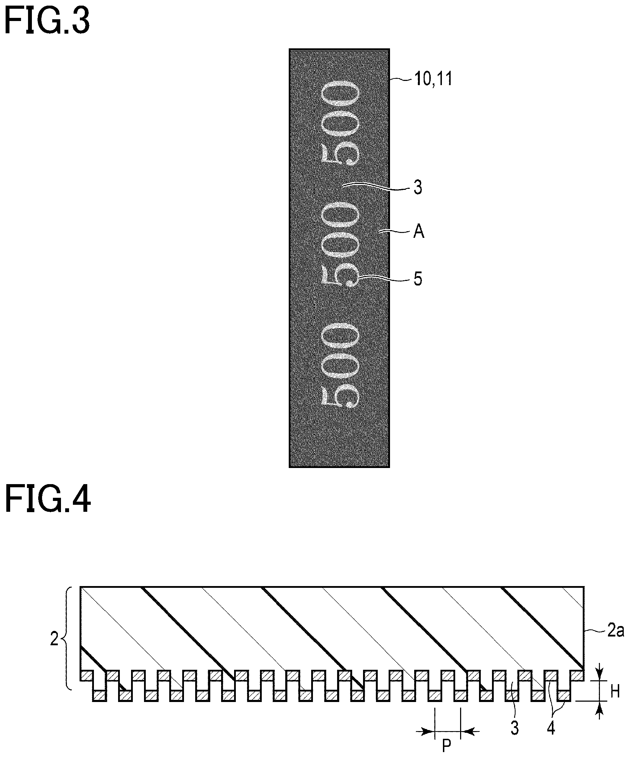

Fig. 3 is a plan view illustrating the display 10 or 11 observed from the carrier 1 side (observed from the upper side in Fig. 1 or 2) in a state in which visible light and light outside the visible light range are applied to the display 10 or 11.

In Fig. 3, a region A corresponds to a region that has developed color due to visible light being incident on the microstructure 3 of the optical resonance structure layer 2 and causing optical resonance in the optical resonance structure layer 2.

In Fig. 3, the shape of characters "500" corresponds to the shape of the fluorescent printing 5 arranged facing the carrier 1. Fig. 3 shows a state in which light outside the visible light range is incident on the fluorescent printing 5 and visible light emerges from the fluorescent printing 5 so that the characters "500" appear.

In the optical resonance region, light having a resonant frequency is reflected, while light from the back surface having a resonant frequency is transmitted. Therefore, as shown in Fig. 3, the color developed due to optical resonance, such as surface plasmon resonance, in the optical resonance region, and the similar-color light of the fluorescent printing 5 on the back surface can both be observed from the carrier 1 side of the display 10 or 11.

The optical resonance structure layer 2 has low dependence on the incident light angle. Accordingly, there is little change in color depending on observation conditions and thus high visibility is ensured. Therefore, authenticity can be easily determined.

Fig. 4 is a partially enlarged cross-sectional view illustrating the optical resonance structure layer 2 as a specific configuration example of the microstructure 3 formed on a surface of the embossed layer 2a facing away from the carrier 1, and the metal layer 4 formed on the microstructure 3. The configuration shown in Fig. 4 is common to both of the displays 10 and 11. The microstructure 3 has convexities and concavities.

The metal layer 4 formed on the microstructure 3 covers bottoms of the concavities of the microstructure 3 and tops of the convexities thereof.

As an example, Fig. 4 shows a microstructure 3 whose convexities each have a rectangular cross section. The cross section does not have to be precisely rectangular. The cross section may be rounded rectangular. In the embodiment of the present invention, the cross section of each convexity of the microstructure 3 is not limited to a rectangular shape but may be any desired shape based on a cone, three-sided pyramid, column, rectangular parallelepiped, or the like as long as the surface plasmons are excited due to interaction with visible light that is incident on the metal layer 4 on the microstructure 3 and there occurs a phenomenon in which the observable color is different before and after entry of visible light due to the optical resonance caused by the excited surface plasmons.

When convexities of the microstructure 3 each have a rectangular cross section as shown in Fig. 4, surface plasmon excitation may easily occur under conditions that the convexities each have a height H in the range of 20 nm or more and 800 nm, and more preferably 50 nm or more and 600 nm or less, and the convexities, if periodically formed, are arranged at an interval P in the range, for example, of 50 nm or more and 1,000 nm or less, and more preferably 100 nm or more and 600 nm or less.

### (Third embodiment of the present invention)

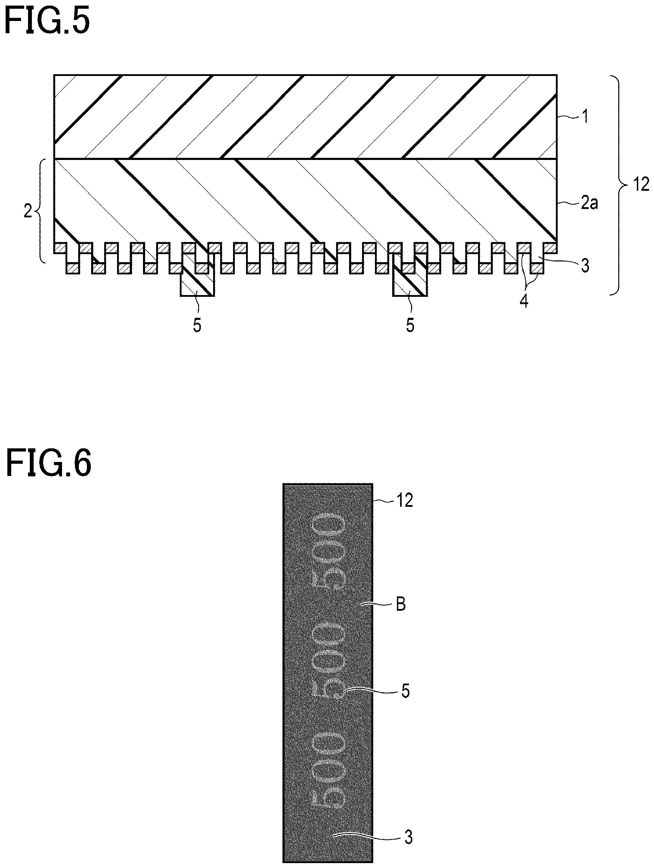

Fig. 5 is a cross-sectional view illustrating an example of a display 12 according to a third embodiment of the present invention.

The display 12 is different from the display 10 only in the arrangement position of the fluorescent printing 5. Specifically, in the display 12, the fluorescent printing 5 is arranged facing the metal layer 4.

Fig. 6 is a plan view of the display 12 observed from the fluorescent printing 5 side (observed from the lower side in Fig. 5) in a state in which visible light and light outside the visible light range are applied to the display 12.

In Fig. 6, a region B corresponds to a region that has developed color due to visible light being incident on the microstructure 3 of the optical resonance structure layer 2 and causing optical resonance in the optical resonance structure layer 2.

In Fig. 6, the shape of characters "500" corresponds to the shape of the fluorescent printing 5 arranged facing the metal layer 4. Fig. 3 shows a state in which light outside the visible light range is incident on the fluorescent printing 5 and visible light emerges from the fluorescent printing 5 so that the characters "500" appear.

Fig. 7 is a plan view of the display 12 observed from the carrier 1 side (observed from the upper side in Fig. 5) in a state in which visible light and light outside the visible light range are applied to the display 12.

The characters "500" of Fig. 7 are also in a state in which light outside the visible light range is incident on the fluorescent printing 5 and visible light emerges from the fluorescent printing 5 so that the characters "500" appear. However, since the fluorescent printing 5 is not formed on the carrier 1, the characters "500" as observed from the carrier 1 side (observed from the upper side in Fig. 5) as shown in Fig. 7 are less luminous, although they are legible, than the characters "500" observed from the fluorescent printing 5 side as shown in Fig. 6.

### (Fourth embodiment of the present invention)

Fig. 8 is a cross-sectional view illustrating an example of a display 13 according to a fourth embodiment of the present invention.

The display 13 is similar to the display 12. However, in the display 13, the embossed layer 2a is provided with two types of microstructures which are a microstructure 3a and a microstructure 3b.

The microstructure 3a has a cross section in a sawtooth shape and the microstructure 3b has convexities each having a cross section in a rectangular shape. Thus, the microstructures 3a and 3b are different in cross-sectional shape. However, the microstructures 3a and 3b may both have a plasmon structure in which optical resonance is caused by visible light, although the produced colors are different.

Alternatively, either one of the microstructures 3a and 3b may have a plasmon structure and the other one may have a structure that can exert an optical effect other than surface plasmon resonance. The structure that can exert an optical effect other than surface plasmon resonance may be a diffractive structure, blazed structure, Fresnel lens structure, moth eye structure, or the like. Such a structure is not particularly limited. Some of the structures mentioned above may be combined with each other.

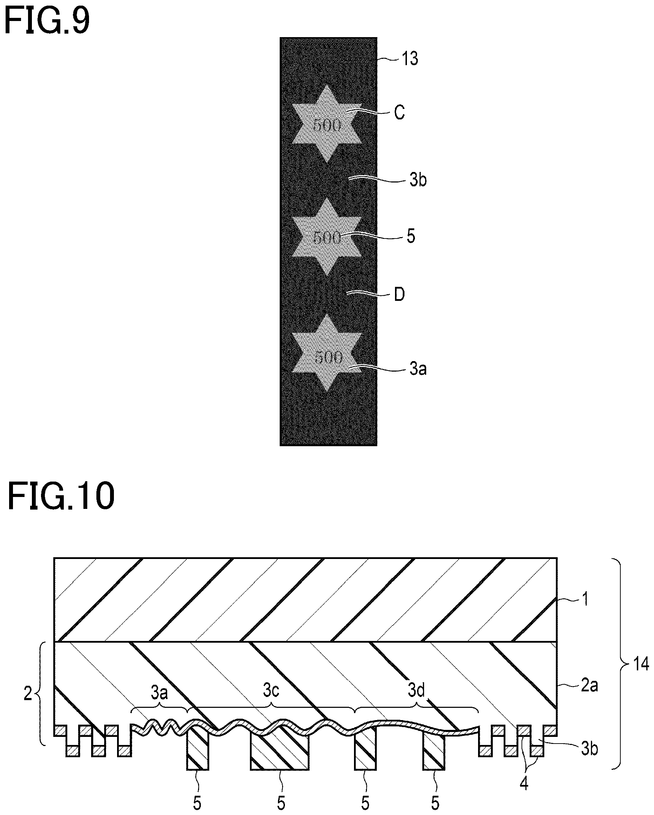

Fig. 9 is a plan view of the display 13 observed from the carrier 1 side (observed from the upper side in Fig. 8) in a state in which visible light and light outside the visible light range are applied to the display 13. The microstructure 3a of the display 13 is a diffraction grating that produces diffracted light, while the microstructure 3b is a structure having asperities that generate surface plasmon resonance.

In Fig. 9, a region C is a region that produces a color of diffracted light of the microstructure 3a serving as a diffraction grating. In Fig. 9, a region D is a region that produces a color of optical resonance, such as surface plasmon resonance, caused by the microstructure 3b. Inside the region C, the characters "500" corresponding to the shape of the fluorescent printing 5 are presented by visible light.

### (Fifth embodiment of the present invention)

Fig. 10 is a cross-sectional view illustrating an example of a display 14 according to a fifth embodiment of the present invention.

### Amendments for prosecution in the EPO regional phase

The display 14 is similar to the display 13. However, in the display 14, the embossed layer 2a is provided with a microstructure 3c and a microstructure 3d in addition to the microstructures 3a and 3b. In other words, the embossed layer 2a is provided with four types of microstructures 3a, 3b, 3c and 3d.

The microstructures 3a, 3c and 3d of the display 14 are diffraction gratings that produce diffracted light, while the microstructure 3b is a structure having asperities that generate surface plasmon resonance. The microstructures 3a, 3c and 3d have grating periods different from each other.

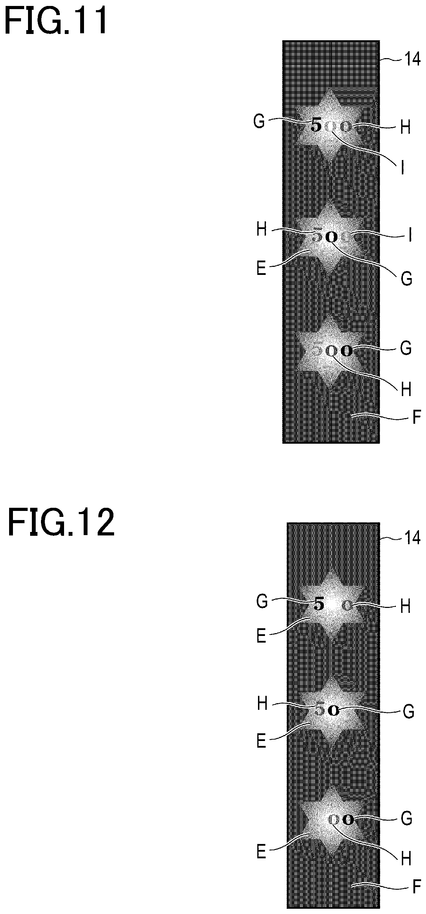

Fig. 11 is a plan view of the display 14 observed from the carrier 1 side (observed from the upper side in Fig. 10) in a state in which visible light and light outside the visible light range are applied to the display 14.

In Fig. 11, a region E is a region that produces a color of diffracted light of the microstructure 3a serving as a diffraction grating. A region F is a region that produces a color of optical resonance caused by the microstructure 3b. A region G is a region that produces a color of diffracted light of the microstructure 3c serving as a diffraction grating. A region H is a region that produces a color of diffracted light of the microstructure 3d serving as a diffraction grating. A region I is a region that allows a character "0" or "5" corresponding to the shape of the fluorescent printing 5 to appear as a result of light outside the visible light range being incident on the fluorescent printing 5 and visible light emerging from the fluorescent printing 5.

Fig. 12 is a plan view of the display 14 observed from the carrier 1 side (observed from the upper side in Fig. 10) in a state in which only visible light is applied to the display 14.

The fluorescent printing 5 is not luminous because only visible light is applied and light outside the visible light range is not applied. Accordingly, in Figs. 12, the region I shown in Fig. 11 does not appear.

Thus, the display 14 allows the specific information of the characters "500" to appear by simultaneously applying both visible light and light outside the visible light range, but can hide part of the specific information of the characters "500" by applying only visible light.

### (Sixth embodiment of the present invention)

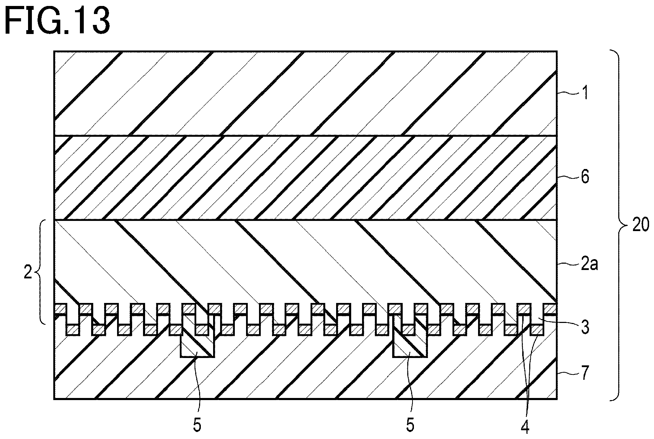

Fig. 13 is a cross-sectional view illustrating an example of an anti-counterfeiting transfer foil 20 according to a sixth embodiment of the present invention.

A display according to any one of the embodiments of the present invention described above may be applied to the anti-counterfeiting transfer foil 20.

The anti-counterfeiting transfer foil 20 in the example shown in Fig. 13 includes the carrier 1 and the optical resonance structure layer 2 of a display according to any one of the embodiments of the present invention. As shown, a release layer 6 is provided between the carrier 1 and the optical resonance structure layer 2, and an adhesive layer 7 is provided to the surface of the metal layer 4.

The release layer 6 may be obtained by adding a lubricant to a resin. The resin may be a thermoplastic resin, a thermosetting resin, a moisture-curable resin, an ultraviolet-curable resin, an electron beam-curable resin, or the like. The resin may be an acrylic resin, a polyester resin, or a polyamide-imide resin. The lubricant may be a polyethylene powder or a wax, such as carnauba wax. These materials may be applied onto the carrier 1 using a known application method, such as gravure printing, micro gravure, or the like.

In the case of the anti-counterfeiting transfer foil 20, the adhesive layer 7 may be a layer that adheres to the surface of an object to be transferred by heat and pressure and thus may be made of a known tackifying material, a thermosensitive adhesive material, or the like.

In the anti-counterfeiting transfer foil 20, a carrier film is applied to the carrier 1, for use as a film that transfers the display including the optical resonance structure layer 2.

As in the example shown in Fig. 13, the display is of a type in which the fluorescent printing 5 is arranged on the surface of the metal layer 4 as shown in Fig. 5, 8 or 10 (display 12, 13 or 14). However, the display applied to the anti-counterfeiting transfer foil 20 is not limited to the display having such a structure, but may be a display having a structure shown in Fig. 1 or 2 (display 10 or 11).

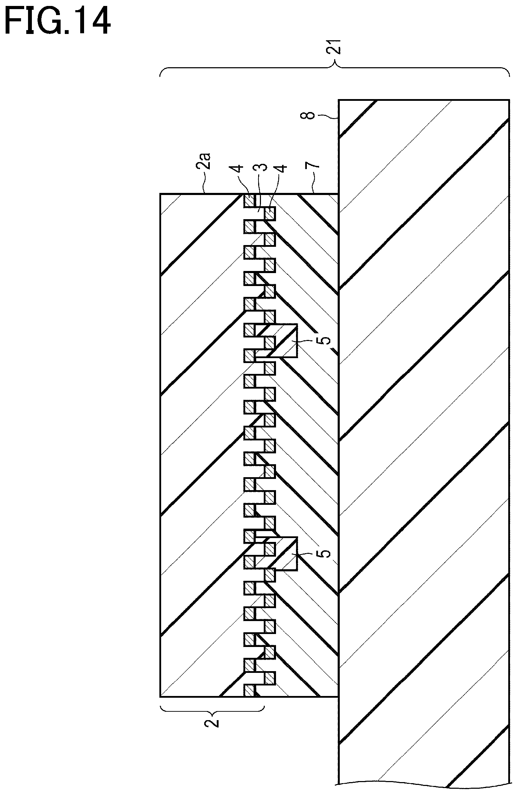

Fig. 14 is a cross-sectional view illustrating an example of anti-counterfeiting paper 21 to which the anti-counterfeiting transfer foil 20 has been transferred, and from which the release layer 6 and the carrier 1 have been released.

The anti-counterfeiting paper 21 shown in Fig. 14 is produced by transferring the anti-counterfeiting transfer foil 20 as shown in Fig. 13 to a transfer target substrate 8. Therefore, the anti-counterfeiting transfer foil 20 is configured by temporarily forming the optical resonance structure layer 2 of the display on the carrier 1, i.e., a carrier film, and then transferring the optical resonance structure layer 2 onto the transfer target substrate 8 made of paper or a plastic film by heat and pressure.

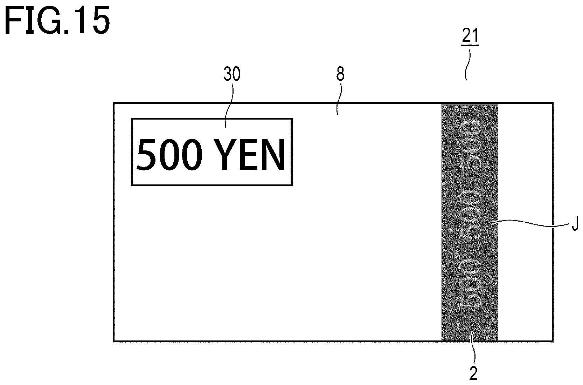

Fig. 15 is a plan view illustrating an example of the anti-counterfeiting paper 21.

The anti-counterfeiting paper 21 can be designed as desired. In Fig. 15, a printed layer 30 on which "500 yen" is printed is provided to the ant-counterfeiting paper 21. For example, as shown in Fig. 14, the optical resonance structure layer 2 may be provided in the vertical direction in the figure, i.e., in the longitudinal direction of an anti-counterfeiting thread 25.

The printing 30 is provided by printing an ink. The printing 30 may be a printing of characters or a motif and can be added onto the carrier 1 or the transfer target substrate 8. The characters or the motif can be printed by a known printing method, such as offset printing, gravure printing or relief printing, by using a known ink material, such as an offset ink, a gravure ink or a relief ink, suitable for the printing method.

When visible light and light outside the visible light range are applied to the anti-counterfeiting paper 21, there are displayed a color developed region J due to optical resonance being caused by visible light in the optical resonance region, and characters "500 500 500" due to the fluorescent printing 5 developing color with light outside the visible light range.

### (Seventh embodiment of the present invention)

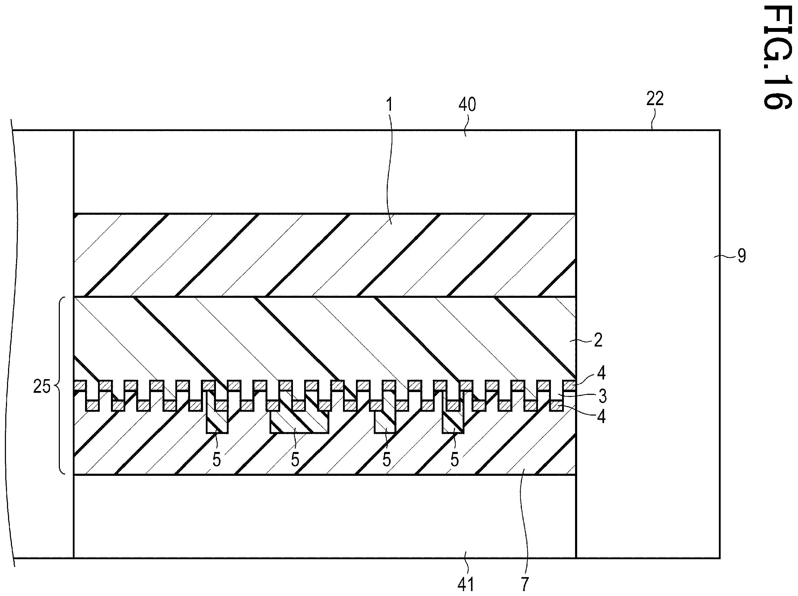

Fig. 16 is a cross-sectional view illustrating an example of anti-counterfeiting paper 22 according to a seventh embodiment of the present invention.

The anti-counterfeiting paper 22 shown in Fig. 16 is produced by incorporating an anti-counterfeiting thread 25 into a paper substrate 9 so as to appear from a window.

The anti-counterfeiting thread 25 has a configuration in which a display according to any one of the embodiments of the present invention described above is provided to at least either of the surface of the carrier 1 and the surface of the metal layer 4 via the adhesive layer 7.

In the paper substrate 9, a portion where the anti-counterfeiting thread 25 is incorporated is provided with windows 40 and 41 at the top and bottom surfaces.

The anti-counterfeiting thread 25 can be observed from both the front and back surfaces of the anti-counterfeiting paper 22 via the windows 40 and 41. As in the example shown in Fig. 16, the windows 40 and 41 may extend to portions where there is no microstructure 3.

The material that can be used for the paper substrate 9 may be plant pulp such as of softwood, hardwood, cotton, rice, esparto, bagasse, hemp, flax, kenaf or cannabis, or synthetic fibers made of a plastic material, such as polyethylene terephthalate, polypropylene, polyacrylate or polyvinyl chloride.

A water-diluted material obtained by beating a plant pulp or synthetic fibers in water is subjected to a paper-making process for entwinement, followed by dehydration and drying. In this process, the paper obtains interfiber strength due to hydrogen bonds between hydroxyl groups of cellulose that is the material of the paper. As a loading material of the paper, clay, talc, calcium carbonate, titanium dioxide, or the like may be used. As a sizing agent, rosin, alkyl ketene dimer, stearic anhydride, alkenyl succinic anhydride, waxes, or the like may be used. As a paper strength enhancer, a modified starch, polyvinyl alcohol, polyacrylamide, urea-formaldehyde, melamine-formaldehyde, polyethyleneimine, or the like may be used. These materials may be added to the water-diluted material as necessary.

The paper-making method used for the anti-counterfeiting paper 22 may be an existing layering method used for plant fiber paper. In the method, paper is made by kneading fibers well, which have been sufficiently swollen with a water-diluted material having a material concentration in the range of 0.5% or more and 10% or less, and more preferably 1% or more and 2% or less, and having the kneaded material flow onto a screen or mesh wire part for laying thereon, followed by dehydration and heating of the material to evaporate water. In this case, before dehydration, a thread including the display according to any one of the embodiments of the present invention is placed between the upper surface and the lower surface of the paper substrate 9. Close-contact layering is then performed by dehydration and heating with the three layers being overlapped. It should be noted that the front and back of the wire part used for the layering process are provided with desired protrusions, so that the fibers are not placed on the protrusions during the layering process but are placed only on the remaining portions of the screen or mesh. By placing the thread in conformity with the protrusions, the thread can appear from windows after the layering process.

As shown in Fig. 16, the adhesive layer 7, in the case of being incorporated into the paper substrate 9 together with the anti-counterfeiting thread 25, may only need to adhere to the paper substrate at the time of drying during the paper making process. Thus, a known tackifying material or thermosensitive adhesive material may be used.

The display configuring the anti-counterfeiting thread 25 shown in Fig. 16 is of a type in which the fluorescent printing 5 is arranged on the surface of the metal layer 4 as shown in Fig. 5, 8 or 10 (display 12, 13 or 14). However, the configuration of the display is not limited to this but may be the configuration shown in Fig. 1 or 2 (display 10 or 11).

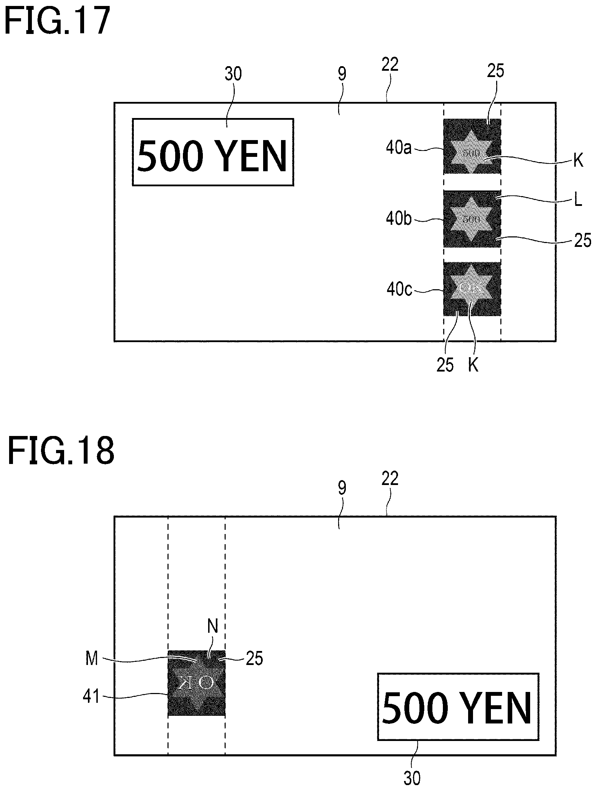

Fig. 17 is a plan view illustrating an example of a front surface of the anti-counterfeiting paper 22. Fig. 18 is a plan view illustrating an example of a back surface of the anti-counterfeiting paper 22.

As shown in Fig. 17, on the front surface of the anti-counterfeiting paper 22, the anti-counterfeiting thread 25 is exposed from three square windows 40a, 40b and 40c of the paper substrate 9. When visible light is incident on the paper, hexangular stellate colored regions K attributed to the microstructure 3 appear. In the flat portions where the microstructure 3 is not formed, metallic glossy regions L due to the metal layer 4 can be observed. When light outside the visible light range is applied in addition to visible light, characters "OK" producing color attributed to the fluorescent printing 5 can be simultaneously observed.

As shown in Fig. 18, on the back surface of the anti-counterfeiting paper 22, a window 41 is provided to a position corresponding to the position of the window 40c of the front surface. This window enables observation, from the back surface as well, of a region M having a color attributed to the microstructure 3 or observation of mirror-reversed characters "OK" producing color attributed to the fluorescent printing 5.

The embodiments of the present invention and advantageous effects thereof will be described by way of specific examples. However, these examples do not limit the application range of the embodiments of the present invention.

### (Example 1)

As a carrier 1, a polyethylene terephthalate (PET) film having a thickness of 50 µm was used. To one surface of the carrier 1, a fluorescent printing ink comprising the following composition was applied by screen printing and dried to form a fluorescent printing 5 in a shape of characters "500" and having a thickness of 3 µm.

Next, on a surface of the carrier 1 facing away from the surface where the fluorescent printing 5 was formed, an optical resonance structure layer ink comprising the following composition was applied by gravure printing and dried to form an optical resonance structure layer 2 having a thickness of 3 µm.

Next, a metal plate was prepared as a matrix of a structure having asperities inverse of those of a microstructure 3 which was to be formed for causing surface plasmon excitation. This matrix metal plate, with a thermal pressure being applied thereto, was pressed against the optical resonance structure layer 2 for embossing. Thus, a microstructure 3 as desired was formed on the optical resonance structure layer 2.

Next, aluminum was vacuum-deposited with a thickness of 60 nm on the microstructure 3 to provide a metal layer 4 for causing surface plasmon excitation. Thus, a display 10 including an optical resonance structure layer 2 and a fluorescent printing was prepared.

### [Composition of the fluorescent printing ink]

| | |
|---|---|
| Acrylic resin | 18.0 parts by weight |
| UV luminous fluorescent agent | 2.0 parts by weight |
| Cyclohexanone | 80.0 parts by weight |

### [Composition of the optical resonance structure layer ink]

| | |
|---|---|
| Urethane resin | 24.0 parts by weight |
| Silicon-based additive | 1.0 parts by weight |
| Methyl ethyl ketone | 75.0 parts by weight |

The display 10 obtained in this way was placed on a desk so that the surface where the fluorescent printing 5 had been formed on the carrier 1 faced upward. The display 10 in this case was under an environment of natural light, such as sunlight, as visible light, or under an environment of artificial lighting, such as a white fluorescent lamp or a white LED. When the surface was examined in this state, a red color due to optical resonance, which was considered to be caused by surface plasmon excitation, was observed.

When light including ultraviolet rays was applied to the display 10, characters "500" due to the fluorescent printing 5, as shown in Fig. 3, were observed producing a yellow color.

Furthermore, artificial lighting, such as a white fluorescent lamp or a white LED, was set up at the back surface of the display 10 (surface facing away from the carrier 1) to observe the illumination light transmitting through the display 10. As a result of the observation, it was confirmed that optical resonance, which was considered to be caused by surface plasmon excitation, occurred on the back surface, and a green color different from the initially observed color was produced on the observation-side surface.

Thus, if a red color is produced on a surface of the display 10 as a result of visible light being incident thereon and exerting wavelength conversion effect of optical resonance that is considered to be caused by surface plasmon excitation, a green color may be simultaneously observed on the surface of the display 10 facing away from the surface where red color was observed. Thus, it was confirmed that the light transmitted through the surface of the display 10 facing away from the visible light incident surface corresponded to a wavelength obtained by subtracting the wavelength of visible light that was observed on the incident surface from the wavelength of visible light, and that colors that were observed on the front and back surfaces of the display 10 were in a complementary color relationship.

Therefore, if a red-color display is counterfeited by using some printing method, for example, the counterfeit product may appear to be similarly red when observed; however, when the counterfeit product is observed from the opposite side by holding it up to light, no color change occurs, i.e., the red color remains unchanged, in the counterfeit product. In this regard, in the display according to the embodiment of the present invention, the transmitted light is green, that is a completely different color. In addition, when ultraviolet rays are applied to the fluorescent printing 5 which produces no color in visible light, a yellow color is produced therein. Thus, authenticity can be easily verified by these two inspections.

### (Example 2)

As a carrier 1, a polyethylene terephthalate (PET) film having a thickness of 16 µm was used. To one surface of the carrier 1, a release layer ink comprising the following composition was applied by gravure printing and dried to form a release layer 6 having a thickness of 1 µm.

Next, to one surface of the release layer 6, an optical resonance structure layer ink comprising the following composition was applied by gravure printing and dried to form an optical resonance structure layer 2 having a thickness of 1 µm.

Next, a metal plate was prepared as a matrix of a structure having asperities inverse of those of a microstructure 3 which was to be formed for causing surface plasmon excitation. This matrix metal plate, with a thermal pressure being applied thereto, was pressed against the optical resonance structure layer 2 for embossing. Thus, a microstructure 3 as desired was formed on the optical resonance structure layer 2.

Next, aluminum was vacuum-deposited with a thickness of 60 nm on the microstructure 3 to provide a metal layer 4 for causing surface plasmon excitation.

Next, a fluorescent printing ink comprising the following composition was applied onto the metal layer 4 by screen printing and dried to form fluorescent printing 5 in a shape of characters "500" and having a thickness of 2 µm.

Next, an adhesive layer ink comprising the following composition was applied onto the fluorescent printing 5 and the entire exposed surface of the metal layer 4 by gravure printing and dried to form an adhesive layer 7 having a thickness of 6 µm. Thus, an anti-counterfeiting transfer foil 20 was prepared.

### [Composition of the release layer ink]

| | |
|---|---|
| Acrylic resin | 19.5 parts by weight |
| Polyethylene powder | 0.5 parts by weight |
| Methyl ethyl ketone | 80.0 parts by weight |

### [Composition of the optical resonance structure layer ink]

| | |
|---|---|
| Urethane resin | 24.0 parts by weight |
| Silicon-based additive | 1.0 parts by weight |
| Methyl ethyl ketone | 75.0 parts by weight |

### [Composition of the fluorescent printing ink]

| | |
|---|---|
| Acrylic resin | 18.0 parts by weight |
| UV luminous fluorescent agent | 2.0 parts by weight |
| Methyl ethyl ketone | 80.0 parts by weight |

### [Composition of the adhesive layer ink]

Vinyl chloride-vinyl acetate copolymer resin

| | |
|---|---|
| | 15.0 parts by weight |
| Acrylic resin | 10.0 parts by weight |
| Methyl ethyl ketone | 45.0 parts by weight |
| Toluene | 30.0 parts by weight |

Finally, a relief printing plate made of brass and having a rectangular transfer surface was loaded on a vertical transfer apparatus. Further, the anti-counterfeiting transfer foil 20 was placed on OCR paper having a basis weight of 90 g/m² and serving as a transfer target substrate 8, so that the carrier 1 would be on top. The transfer foil 20 placed on the OCR paper was located right beneath the relief printing plate. Thermal transfer was performed in this state and the carrier 1 that was no longer needed was released to thereby prepare anti-counterfeiting paper 21.

The anti-counterfeiting paper 21 prepared in this way was placed on a desk so that the surface where the anti-counterfeiting transfer foil 20 had been transferred faced upward. The anti-counterfeiting paper 21 in this case was under an environment of direct light, such as sunlight, as visible light, or under an environment of direct light of artificial lighting, such as a fluorescent lamp or a LED. When the surface was examined in this state, a violet color due to optical resonance, which was considered to be caused by surface plasmon excitation, was observed.

When light including ultraviolet rays was applied to the display, characters "500" due to the fluorescent printing 5, as shown in Fig. 15, were observed producing an orange color.

Furthermore, artificial lighting, such as a white fluorescent lamp or a white LED, was set up at the back surface of the anti-counterfeiting paper 21 to observe, from the front surface, the illumination light transmitting through the paper substrate 9 and the display. As a result of the observation, it was confirmed that optical resonance, which was considered to be caused by surface plasmon excitation, occurred on a surface of the display facing away from the front surface, and a yellow color different from the initially observed color was produced on the observation-side surface.

Thus, if a violet color is produced on a surface of the anti-counterfeiting paper 21 as a result of visible light being incident on the display and exerting a wavelength conversion effect of optical resonance that is considered to be caused by surface plasmon excitation, a yellow color may be simultaneously observed on the surface of the anti-counterfeiting paper 21 facing away from the surface where violet color was observed. Thus, it was confirmed that the light transmitted through the surface of the display of the anti-counterfeiting paper 21 facing away from the visible light incident surface corresponded to a wavelength obtained by subtracting the wavelength of visible light that was observed on the incident surface from the wavelength of visible light, and that colors that were observed on the front and back surfaces of the display were in a complementary color relationship.

Therefore, if a violet-color display is counterfeited by using some printing method, for example, the counterfeit product may appear to be similarly violet when observed; however, when the counterfeit product is observed from the opposite side by holding it up to light, no color change occurs, i.e., the violet color remains unchanged, in the counterfeit product. In this regard, in the display according to the embodiment of the present invention, the transmitted light is yellow, that is a completely different color. In addition, when ultraviolet rays are applied to the fluorescent printing 5 which has developed no color in visible light, an orange color is produced in the fluorescent printing 5. Thus, authenticity can be easily verified by these two inspections.

### (Example 3)

As a carrier 1, a polyethylene terephthalate (PET) film having a thickness of 12 µm was used. To one surface of the carrier 1, an optical resonance structure layer ink comprising the following composition was applied by gravure printing and dried to form an optical resonance structure layer 2 having a thickness of 1 µm.

Next, a metal plate was prepared as a matrix of a structure having asperities inverse of those of a microstructure 3 which was to be formed in a hexangular stellate shape (see Fig. 17) for causing surface plasmon excitation. This matrix metal plate, with a thermal pressure being applied thereto, was pressed against the optical resonance structure layer 2 for embossing. Thus, a microstructure 3 as desired was formed on the optical resonance structure layer 2.

Next, aluminum was vacuum-deposited with a thickness of 60 nm on the microstructure 3 to provide a metal layer 4 for causing surface plasmon excitation.

Next, a fluorescent printing ink comprising the following composition was applied onto the metal layer 4 by screen printing and dried to form fluorescent printing 5 in a shape of characters "500" and having a thickness of 2 µm.

Next, an adhesive layer ink comprising the following composition was applied onto the fluorescent printing 5 and the entire exposed surface of the metal layer 4 by gravure printing and dried to form an adhesive layer 7 having a thickness of 3 µm. Then, slits were cut with a desired strip-like shape in the resultant object. Thus, an anti-counterfeiting thread 25 having a display was prepared.

Next, softwood pulp was beaten in water and then the concentration was adjusted to 1.5%. This softwood pulp was then subjected to a paper-making process for a first time using a paper-making mesh and a manual paper-making device. The paper-making mesh in this case had been obtained by processing metal so as to have square windows at portions. On the softwood pulp subjected to a paper-making process, the anti-counterfeiting thread 25 was placed such that the hexangular stellate shapes of the microstructure 3 would be exposed from the respective square windows. Then, the softwood pulp previously subjected to a paper-making process was subjected to a paper-making process for a second time together with the anti-counterfeiting thread 25, followed by dehydration and drying. Thus, anti-counterfeiting paper 22 as shown in Figs. 16 to 18 having a basis weight of 100 g/m² was prepared.

In the anti-counterfeiting paper 22 prepared in this way, the anti-counterfeiting thread 25 including a display that is provided with the optical resonance structure layer 2 is incorporated into the paper substrate 9. The anti-counterfeiting thread 25 is exposed from the three windows 40a, 40b and 40c on the front surface of the anti-counterfeiting paper 22 and exposed from one window 41 on the back surface thereof. Of these windows, the windows 40c and 41 are in a face-to-face positional relationship sandwiching the anti-counterfeiting thread 25.

The anti-counterfeiting paper 22 was illuminated from behind the observer in a direct light environment and the anti-counterfeiting thread 25 exposed from the windows 40a, 40b and 40c was examined. As a result, the portions where the microstructure 3 was formed were each observed to be red in a hexangular stellate shape as indicated by the regions K in Fig. 17, and the flat portions around the respective stellate shape portions were observed to be metallically glossy due to aluminum as indicated by the regions L.

When ultraviolet rays were applied to the hexangular stellate shape portions, the characters "500" produced a yellowish green color.

Furthermore, artificial lighting, such as a white fluorescent lamp or a white LED, was set up at the back surface of the anti-counterfeiting paper 22 to observe the illumination light transmitted through the anti-counterfeiting thread 25. As a result of the observation, it was confirmed that optical resonance, which was considered to be caused by surface plasmon excitation, occurred on a surface of the display facing away from the front surface as indicated by the region N shown in Fig. 18, and green light different from the initially observed color was transmitted through the hexangular stellate portion on the observation-side surface as indicated by the region K in the window 40c shown in Fig. 17.

Thus, in the anti-counterfeiting paper 22, when visible light was incident on the microstructure 3, whether the incident surface was the front or back, optical resonance, which was considered to be caused by surface plasmon excitation, occurred on the surface where light was incident to enable observation of a color due to the wavelength conversion effect. At the same time, the fluorescent printing 5 also produced color by application of ultraviolet rays. Production of these colors enabled observation of a motif which was a combination of the color considered to be due to plasmons, with the color due to the fluorescent printing 5. Thus, it was confirmed that the anti-counterfeiting paper 22 facilitated verification of authenticity, while enhancing the anti-counterfeiting effects.

As described above, any one of the embodiments of the present invention provides a display which is capable of preventing production of imitation products by use of color inks and is capable of more reliably detecting counterfeiting or imitation, and provides an anti-counterfeiting transfer foil, anti-counterfeiting paper, anti-counterfeiting thread paper and an anti-counterfeiting medium to which the display is applied.

## Claims

1. A display (10, 11, 12, 13, 14) using optical interaction and comprising an optical resonance structure layer (2) provided with an embossed layer (2a) and a metal layer (4), wherein
the metal layer (4) covers bottoms of concavities and tops of convexities of asperities (3) formed in the embossed layer (2a); and
an optical resonance region, in which the asperities (3) are covered with the metal layer (4), resonates with incident light;
**characterized in that**
the display (10, 11, 12, 13, 14) is provided with fluorescent printing (5) so as to overlap with the optical resonance region, the fluorescent printing (5) permitting visible light to emerge when light outside a visible light range is incident thereon;
a color of visible light emerging due to light outside the visible light range being incident on the fluorescent printing (5) is similar to a color of light that is transmitted therethrough and that is resonating in the optical resonance region; and
a half width of a wavelength peak of visible light produced due to light outside the visible light range being incident on the fluorescent printing (5) is larger than a half width of light that is transmitted therethrough and that is resonating in the optical resonance region.

2. The display (10, 11, 12, 13, 14) according to claim 1, **characterized in that** a motif is recorded in conformity with a contour of an optical resonance region of the optical resonance structure layer (2), the optical resonance region being provided with asperities, and the motif is displayed with a unique color due to optical resonance with visible light.

3. The display (10, 11, 12, 13, 14) according to claim 2, **characterized in that** the fluorescent printing (5) contains an optical material that allows visible light to emerge when light outside a visible light range is incident on the material.

4. The display (10, 11, 12, 13, 14) according to claim 3, **characterized in that** light outside the visible light range includes at least any of ultraviolet rays, infrared rays, X-rays and radioactivity.

5. Anti-counterfeiting thread paper (22) **characterized in that** the anti-counterfeiting thread paper (22) is configured by incorporating an anti-counterfeiting thread (25) into a paper layer (9), the anti-counterfeiting thread (25) including the display (10, 11, 12, 13, 14) according to any one of claims 1 to 4, the display (10, 11, 12, 13, 14) being provided with an adhesive layer (7) at at least either a first surface or a second surface thereof.

6. The anti-counterfeiting thread paper (22) according to claim 5, **characterized in that** at least either of a front surface and a back surface of the paper layer is provided with a window (40, 41) for exposing the anti-counterfeiting thread (25) incorporated into the paper layer (9).

7. An anti-counterfeiting medium (21) **characterized in that** the anti-counterfeiting medium is configured by affixing a display to an article (8) via an adhesive layer (7), the display being a display (10, 11, 12, 13, 14) according to any one of claims 1 to 4 and being provided with the adhesive layer (7) at at least either a first surface or a second surface thereof.

## Patentansprüche

1. Anzeige (10, 11, 12, 13, 14), die optische Wechselwirkung verwendet und eine optische Resonanzstrukturschicht (2) umfasst, die mit einer geprägten Schicht (2a) und einer Metallschicht (4) versehen ist, wobei
die Metallschicht (4) Talsohlen von Konkavitäten und Gipfel von Konvexitäten von Oberflächenunebenheiten (3), die in der geprägten Schicht (2a) ausgebildet sind, bedeckt; und
ein optischer Resonanzbereich, in dem die Oberflächenunebenheiten (3) mit der Metallschicht (4) bedeckt sind, mit einfallendem Licht in Resonanz steht;
**dadurch gekennzeichnet, dass**
die Anzeige (10, 11, 12, 13, 14) mit Fluoreszenzdruck (5) versehen ist, so dass dieser mit dem optischen Resonanzbereich überlappt, wobei der Fluoreszenzdruck (5) es sichtbarem Licht erlaubt zu entstehen, wenn Licht außerhalb eines Bereichs des sichtbaren Lichts auf ihn fällt;
die Farbe von sichtbarem Licht, das infolge von Licht außerhalb des Bereichs von sichtbarem Licht, das auf den Fluoreszenzdruck (5) fällt, entsteht, ähnlich ist zu der Farbe von Licht, das durch ihn hindurchtritt und das in dem optischen Resonanzbereich in Resonanz steht; und die Halbwertsbreite eines Wellenlängenpeaks von sichtbarem Licht, das infolge von Licht außerhalb des Bereichs von sichtbarem Licht, das auf den Fluoreszenzdruck (5) fällt, entsteht, größer ist als die Halbwertsbreite von Licht, das durch ihn hindurchtritt und das in dem optischen Resonanzbereich in Resonanz steht.

2. Anzeige (10, 11, 12, 13, 14) gemäß Anspruch 1, **dadurch gekennzeichnet, dass** ein Motiv in Übereinstimmung mit einer Kontur eines optischen Resonanzbereichs der optischen Resonanzstrukturschicht (2) aufgezeichnet ist, wobei der optische Resonanzbereich mit Oberflächenunebenheiten versehen ist und das Motiv infolge von optischer Resonanz mit sichtbarem Licht in einer spezifischen Farbe angezeigt wird.

3. Anzeige (10, 11, 12, 13, 14) gemäß Anspruch 2, **dadurch gekennzeichnet, dass** der Fluoreszenzdruck (5) ein optisches Material enthält, das es sichtbarem Licht erlaubt zu entstehen, wenn Licht außerhalb eines Bereichs des sichtbaren Lichts auf das Material fällt.

4. Anzeige (10, 11, 12, 13, 14) gemäß Anspruch 3, **dadurch gekennzeichnet, dass** Licht außerhalb des Bereichs des sichtbaren Lichts zumindest eines von UV-Strahlen, Infrarotstrahlen, Röntgenstrahlen und Radioaktivität einschließt.

5. Fälschungssicheres Faserpapier (22), **dadurch gekennzeichnet, dass** das fälschungssichere Faserpapier (22) eingerichtet ist, indem eine fälschungssichere Faser (25) in eine Papierschicht (9) aufgenommen ist, wobei die fälschungssichere Faser (25) die Anzeige (10, 11, 12, 13, 14) gemäß mindestens einem der Ansprüche 1 bis 4 einschließt und die Anzeige (10, 11, 12, 13, 14) auf zumindest einer ersten Oberfläche oder einer zweiten Oberfläche davon mit einer Klebeschicht (7) versehen ist.

6. Fälschungssicheres Faserpapier (22) gemäß Anspruch 5, **dadurch gekennzeichnet, dass** zumindest eine von einer Vorderseite und einer Rückseite der Papierschicht mit einem Fenster (40, 41) zum Zeigen der in die Papierschicht (9) aufgenommenen fälschungssicheren Faser (25) versehen ist.

7. Fälschungssicheres Medium (21), **dadurch gekennzeichnet, dass** das fälschungssichere Medium eingerichtet ist durch Befestigen einer Anzeige an einen Gegenstand (8) mittels einer Klebeschicht (7), wobei die Anzeige eine Anzeige (10, 11, 12, 13, 14) gemäß mindestens einem der Ansprüche 1 bis 4 ist und auf zumindest einer ersten Oberfläche oder einer zweiten Oberfläche davon mit der Klebeschicht (7) versehen ist.

## Revendications

1. Affichage (10, 11, 12, 13, 14) utilisant une interaction optique et comprenant une couche de structure de résonance optique (2) pourvue d'une couche en relief (2a) et d'une couche métallique (4), dans lequel
la couche métallique (4) recouvre des parties inférieures de concavités et des parties supérieures de convexités d'aspérités (3) formées dans la couche en relief (2a) ; et
une région de résonance optique, dans laquelle les aspérités (3) sont recouvertes avec la couche métallique (4), résonne de lumière incidente ;
**caractérisé en ce que**
l'affichage (10, 11, 12, 13, 14) est pourvu d'une impression fluorescente (5) de manière à chevaucher la région de résonance optique, l'impression fluorescente (5) permettant à de la lumière visible d'apparaître lorsque de la lumière à l'extérieur d'une plage de lumière visible est incidente sur celle-ci ;
une couleur de lumière visible apparaissant en raison de lumière à l'extérieur de la plage de lumière visible étant incidente sur l'impression fluorescente (5) est similaire à une couleur de lumière qui est transmise à travers celle-ci et qui résonne dans la région de résonance optique ; et
une demi-largeur d'un pic de longueur d'onde de lumière visible produite en raison de lumière à l'extérieur de la plage de lumière visible étant incidente sur l'impression fluorescente (5) est supérieure à une demi-largeur de lumière qui est transmise à travers celle-ci et qui résonne dans la région de résonance optique.

2. Affichage (10, 11, 12, 13, 14) selon la revendication 1, **caractérisé en ce qu'**un motif est enregistré conformément à un contour d'une région de résonance optique de la couche de structure de résonance optique (2), la région de résonance optique étant pourvue d'aspérités, et le motif est affiché avec une couleur unique en raison d'une résonance optique avec de la lumière visible.

3. Affichage (10, 11, 12, 13, 14) selon la revendication 2, **caractérisé en ce que** l'impression fluorescente (5) contient un matériau optique qui permet à de la lumière visible d'apparaître lorsque de la lumière à l'extérieur d'une plage de lumière visible est incidente sur le matériau.

4. Affichage (10, 11, 12, 13, 14) selon la revendication 3, **caractérisé en ce que** de la lumière à l'extérieur de la plage de lumière visible inclut au moins l'un quelconque parmi des rayons ultraviolets, des rayons infrarouge, des rayons X et de la radioactivité.

5. Papier à fil anti-contrefaçon (22) **caractérisé en ce que** le papier à fil anti-contrefaçon (22) est configuré en incorporant un fil anti-contrefaçon (25) dans une couche de papier (9), le fil anti-contrefaçon (25) incluant l'affichage (10, 11, 12, 13, 14) selon l'une quelconque des revendications 1 à 4, l'affichage (10, 11, 12, 13, 14) étant pourvu d'une couche adhésive (7) au niveau d'au moins soit une première surface soit une seconde surface de celui-ci.

6. Papier à fil anti-contrefaçon (22) selon la revendication 5, **caractérisé en ce qu'**au moins l'une ou l'autre d'une surface avant et d'une surface arrière de la couche de papier soit pourvue d'une fenêtre (40, 41) pour exposer le fil anti-contrefaçon (25) incorporé dans la couche de papier (9).

7. Support anti-contrefaçon (21) **caractérisé en ce que** le support anti-contrefaçon est configuré en fixant un affichage sur un article (8) par l'intermédiaire d'une couche adhésive (7), l'affichage étant un affichage (10, 11, 12, 13, 14) selon l'une quelconque des revendications 1 à 4 et étant pourvu de la couche adhésive (7) au niveau d'au moins soit une première surface soit une seconde surface de celui-ci.
